**Europäisches Patentamt**

**European Patent Office**

**Office européen des brevets**

(19)

(11) Veröffentlichungsnummer : **0 123 177**
**B1**

(12) **EUROPÄISCHE PATENTSCHRIFT**

(45) Veröffentlichungstag der Patentschrift :
07.09.88

(21) Anmeldenummer : 84103727.8

(22) Anmeldetag : 04.04.84

(51) Int. Cl.⁴ : **G 11 C 17/00**

(54) **Verfahren zum Betreiben eines als nichtflüchtigen Schreib-Lese-Speichers ausgebildeten Anwendungsspeichers und Anordnung zur Durchführung des Verfahrens.**

(30) Priorität : 26.04.83 DE 3315047

(43) Veröffentlichungstag der Anmeldung :
31.10.84 Patentblatt 84/44

(45) Bekanntmachung des Hinweises auf die Patenterteilung : 07.09.88 Patentblatt 88/36

(84) Benannte Vertragsstaaten :
AT DE FR GB IT SE

(56) Entgegenhaltungen :
PATENTS ABSTRACTS OF JAPAN, Band 5, Nr. 134,
26. August 1981, Seite 119P77; & JP - A - 56 71885
(NIPPON DENKI K.K.) 15.06.1981

(73) Patentinhaber : Siemens Aktiengesellschaft Berlin
und München
Wittelsbacherplatz 2
D-8000 München 2 (DE)

(72) Erfinder : Schrenk, Hartmut, Dr., Phys.
Fasanenweg 22
D-8013 Haar (DE)

EP 0 123 177 B1

**Beschreibung**

Die Erfindung betrifft ein Verfahren zum Betreiben (Schreiben, Lesen, Löschen) eines als nichtflüchtiger Schreib-Lese-Speicher ausgebildeten Anwendungsspeichers, in Verbindung mit einem die Anzahl der am Anwendungsspeicher vorgenommenen Löschvorgänge festhaltenden Kontrollspeicher und eine Anordnung zur Durchführung des Verfahrens.

Ein Verfahren und eine Vorrichtung gemäß der Oberbegriffe der Ansprüche 1 und 6 sind aus JP-A-5671885 bekannt.

Integrierte Halbleiterspeicher mit programmierbaren und nichtflüchtigen Speicherzellen sind an sich allgemeiner Stand der Technik. Für die vorliegende Erfindung sind insbesondere elektrisch löschbare Speicher dieser Art, nämlich sog. $E^2$PROM-Speicher von besonderem Interesse. Derartige $E^2$PROM-Speicher sind. z. B. in « Electronics/28. Februar 1980, S. 113-117 » beschrieben.

Bei der Anwendung von nichtflüchtigen Schreib-Lese-Speichern gibt es Fälle, bei denen eine Kontrolle der am Speicher vorgenommenen Löschvorgänge im Interesse der Sicherheit der gespeicherten Daten wünschenswert ist. Insbesondere gilt dies für integrierte Schaltungen in sogenannten Chip-Karten, mit deren Hilfe in zugehörigen elektronisch gesteuerten Automaten z. B. Verbrauchseinheiten bzw. Gebühreneinheiten oder Betriebsstunden zum Zwecke einer Abrechnung registriert werden. Es ist deshalb Aufgabe der Erfindung, eine kostengünstige Schaltung für einen nichtflüchtigen aber löschbaren Speicher der eingangs definierten Art anzugeben, bei der die Anzahl der während der offiziellen Einsatzzeit der Schaltung vorgenommenen Löschvorgänge automatisch - und zwar in unlöschbarer Weise - festgehalten wird, so daß ungerechtfertigte Löschmanipulationen im Gegensatz zu den bekannten Schaltungen der genannten Art durch Kontrolle der Karte leicht erkennbar sind.

Es ist deshalb Aufgabe der Erfindung, eine der eingangs gegebenen Definition entsprechende integrierte Schaltung anzugeben, die sich vor allem auch für die Verwendung in einer Chip-Karte eignet, die außerdem kostengünstig ist und die schließlich auch derart ausgestaltet ist, daß unberechtigte Manipulationen bezüglich des Speicherinhalts im Vergleich zu den bei normalen nichtflüchtigen Speichern gegebenen Verhältnissen leicht erkennbar sind.

Diese Aufgabe wird dadurch gelöst, daß vor jedem Löschvorgang ein Kennzeichen unlöschbar in einen unbeschriebenen Speicherplatz des Kontrollspeichers eingespeichert wird, und daß ohne eine derartige vorherige Abspeicherung des Kennzeichens jeder Löschvorgang unter-bunden wird.

Die Vorrichtung zur Durchführung des Verfahrens ist im Anspruch 6 angegeben.

Weiterbildungen der Erfindung ergeben sich aus den Unteransprüchen.

Da für die Anwendung einer solchen integrierten Schaltung als Speicherzelle wohl kaum andere nichtflüchtige Speicherzellen als elektrisch löschbare Speicherzellen, also sog. $E^2$PROM-Speicherzellen in Betracht kommen, genügt es, für die weitere Beschreibung der Erfindung, sich auf diesen Fall zu beschränken. Aufgrund der von der Erfindung vorgeschlagenen Maßnahme wird somit der nichtflüchtige Anwendungsspeicher durch den Kontrollspeicher derart zu einer Speicherkombination ergänzt, daß in ihr jeder Löschvorgang unverändert registriert wird. Die Registrierung erfolgt in dem — insbesondere nichtlöschbaren — Kontrollspeicher, der durch die als Sicherheitslogik ausgestaltete Logikschaltung in der integrierten Schaltung derart beaufschlagt wird, daß pro Löschvorgang am Anwendungsspeicher in den Kontrollspeicher je ein Bit eingespeichert wird.

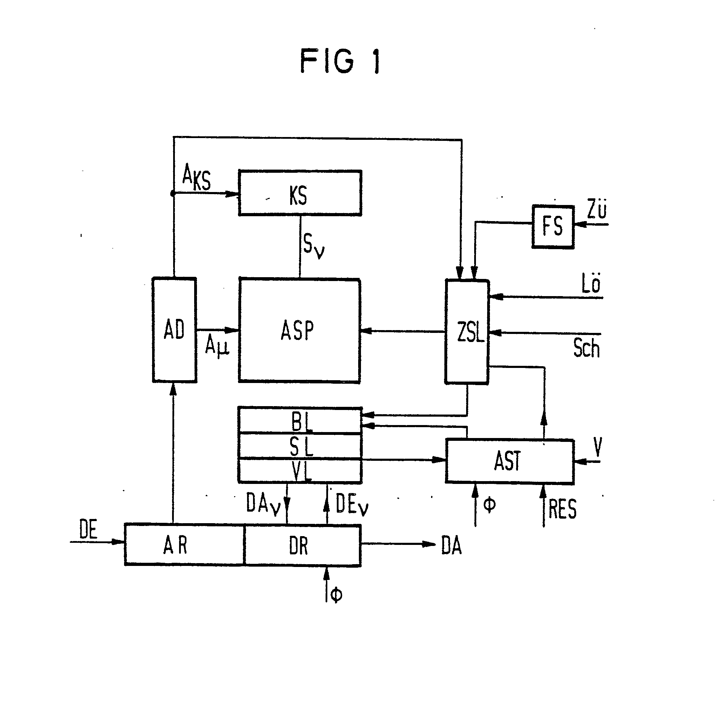

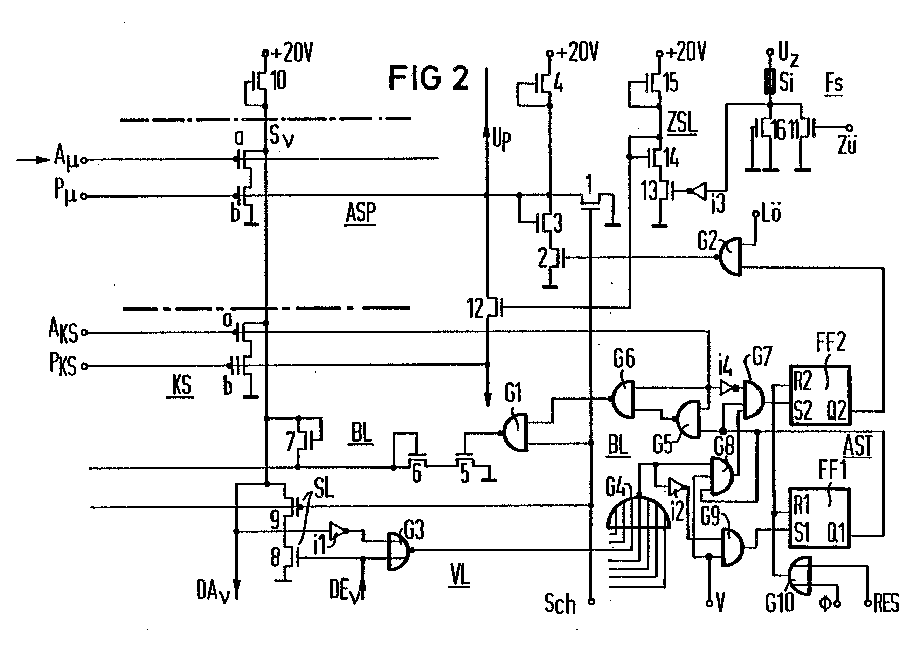

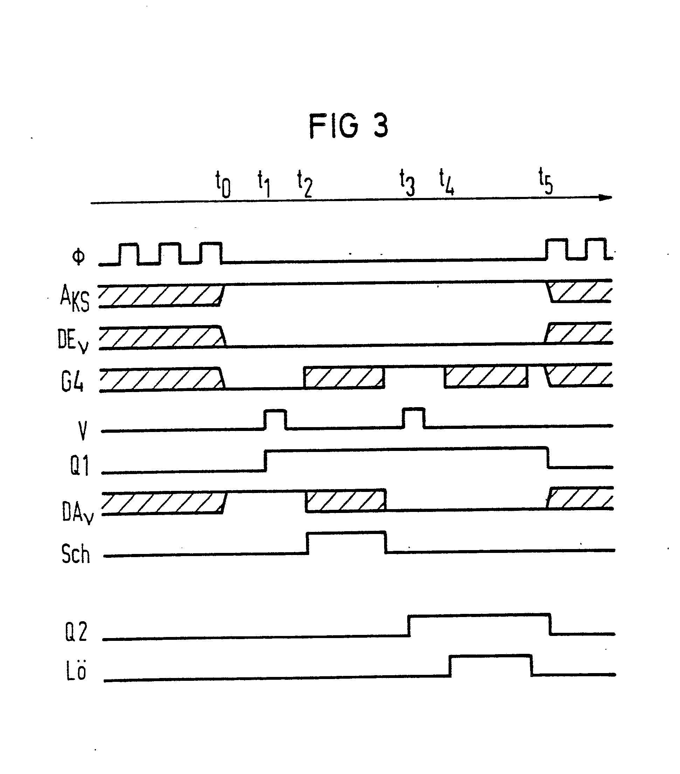

Die Erfindung wird nun anhand der Figuren 1 bis 3 näher beschrieben. Dabei ist in Fig. 1 das für das Wesen der Erfindung charakteristische Blockschaltbild, in Fig. 2 eine bevorzugte Ausgestaltung der Erfindung gemäß diesem Blockschaltbild und in Fig. 3 das Timing der zum Betrieb einer Schaltung gemäß Fig. 1 oder Fig. 2 erforderlichen Signale dargestellt.

Der Kern des in Fig. 1 dargestellten Blockschaltbilds ist das in üblicher Weise in Matrixform aufgebaute und mit zeilenparallel sowie mit spaltenparallel verlaufenden Verbindungsleitungen versehene Speicherfeld des Anwendungsspeichers ASP, der von nichtflüchtigen Speicherzellen insbesondere von $E^2$PROM-Zellen gebildet ist.

Für die Adressierung des Anwendungsspeichers ASP ist ein üblich ausgestalteter Adreßdekoder AD zuständig. Die Eingabe neu einzuspeichernder Daten erfolgt über einen Dateneingang DE, der zunächst zur Beaufschlagung eines Adreß-registers AR und eines Datenregisters DR dient. Dabei bilden das Adreßregister AR und das Datenregister DR zusammen ein durch einen Schiebetakt Ø beaufschlagtes gemeinsames Schieberegister, von dem eine Anzahl unmittelbar hintereinander geschalteter Registerzellen das Adreßregister AR und eine weitere Anzahl hintereinander geschalteter Registerzellen das Datenregister DR darstellen.

Die Eingabe der Adreßdaten aus dem Adreßregister AR in den Adreßdekoder AD sowie die Eingabe der in das Speicherfeld ASP einzuschreibenden Daten aus dem Datenregister DR als auch die Datenauslesung aus dem Speicherfeld in das Datenregister erfolgt in üblicher Weise. Die ausgelesenen Daten werden über den Datenausgang DA zur Verfügung gestellt.

Die Vermittlung der Daten vom Speicherfeld ASP in das Datenregister verlangt im Falle der vorliegenden Erfindung eine besondere Ausgestaltung der die Verbindung zwischen den einzelnen Spaltenleitungen $S_\nu$ ($\nu$ = Nummer der betreffenden Spaltenleitung) und der dieser Spaltenleitung jeweils zugeordneten Registerzelle im Datenregister DR bildenden Spaltenlogik. Neben der den Datentransfer beim Schreiben bzw. beim Auslesen vermittelnden und in üblicher Weise ausgestalteten Steuerlogik SL wird im Falle der vorliegenden Erfindung noch eine Vergleichslogik VL und eine Begrenzerlogik BL erforderlich, deren Aufgabe und Funktion im Anschluß an die Beschreibung der Fig. 1 noch vorgestellt wird.

Die Beaufschlagung der Speichermatrix ASP durch den Adreßdekoder AD erfolgt zeilenweise durch Adreßsignale Aμ, wobei der Index μ die Nummer der durch das betreffende Adreßsignal Aμ vom Adreßdekoder AD adressierte Matrixzeile bzw. die zu dieser Matrixzeile gehörende und die Adressierung vermittelnde Zeilenauswahlleitung (kurz : Zeilenleitung) bedeutet. Jeder dieser Adressierleitungen ist jeweils eine Funktion der Dateneinschreibung bzw. des Löschens dienende und ebenfalls zeilenparallel verlaufende Programmierleitung Pμ zugeordnet. Im einzelnen wird dies sowie die Anschaltung der einzelnen E²PROM-Zellen im Zusammenhang mit Fig. 2 noch näher beschrieben.

Der wesentliche Teil der Erfindung ist der Kontrollspeicher KS, der an sich auf verschiedene Weise aufgebaut sein kann. Im Interesse der Herstellungstechnologie als auch im Interesse eines besonders günstigen Arbeitens empfiehlt es sich jedoch, wenn auch der Kontrollspeicher aus dengleichen Zellen wie der Anwendungsspeicher ASP besteht. Dabei ist der Kontrollspeicher zweckmäßig in die Speichermatrix des Anwendungsspeichers ASP mit aufgenommen und zwar vorteilhafterweise derart, daß der Kontrollspeicher KS und der Anwendungsspeicher ASP die Spaltenleitungen Sν gemeinsam haben, während die zeilenparallel verlaufenden Leitungen Aμ und Pμ entweder nur auf den Anwendungsspeicher ASP oder auf den Kontrollspeicher jeweils beschränkt sind. Dies ist ebenfalls in Fig. 2 berücksichtigt. Somit sind sowohl der Anwendungsspeicher als auch der Kontrollspeicher für sich über die jeweils zugehörigen Auswahlleitungen Aμ adressierbar.

Ein weiterer für die Erfindung wesentlicher Schaltungsteil ist durch die zur Beaufschlagung der Programmierleitungen Pμ im Anwendungsspeicher ASP und bevorzugt auch im Kontrollspeicher KS zuständige Zeilensteuerlogik ZSL und die auf die im vorliegenden Fall gestellten Aufgaben spezialisierte Ablaufsteuerung AST gegeben, die u.a. vom Schiebetakt für das das Adreßregister AR und das Datenregister DR bildende Schieberegister mitgesteuert wird.

Die Ablaufsteuerung wird außerdem durch ein Vergleichssignal V und ggf. durch ein Rücksetzsignal RES gesteuert, während die Zeilensteuerlogik ZSL die Aufgabe hat, die jeweils inbetrachtkommenden Programmierleitungen Pμ des Speicherfelds auf die für die einzelnen Betriebszustände des Speichers, d. h. also Lesen, Schreiben, Löschen, erforderlichen Bedingungen zu schalten. Sie wird aus diesem Grund durch ein externes Schreibsignal Sch bzw. Löschsignal Lö als auch durch die Ablaufsteuerung AST beeinflußt.

Um den Kontrollspeicher KS vor seinem offiziellen Einsatz ohne bleibenden Verlust an Speicherzellen beliebig oft zu Testzwecken löschen zu können, ist eine bestimmte Einstellung der Gesamtsteuerung des Speichers erforderlich. Kurz vor seinem offiziellen Einsatz wird dann der Speicher, wie bereits oben angedeutet, durch eine entsprechende Umstellung der Gesamtsteuerung zu einem unlöschbaren Speicher umgeschaltet. Der hierzu geeignete Schaltungsteil FS ist hierzu mit einer Schmelzsicherung versehen, nach deren Durchtrennung der Kontrollspeicher KS seine Löschbarkeit verloren hat. Damit wird auch die für den Anwendungsspeicher ASP mögliche Anzahl von Löschvorgängen, die vorher ebenfalls beliebig war, nunmehr durch die Anzahl der im Kontrollspeicher KS im unbeschriebenen Zustand zur Verfügung stehenden Speicherzellen bestimmt. Bei Durchtrennung der Schmelzsicherung muß der Kontrollspeicher gelöscht sein. Im einzelnen haben somit die Blöcke des in Fig. 1 dargestellten Blockschaltbilds einer Schaltung gemäß der Erfindug folgende Funktionen und Eigenschaften :

1. Anwendungsspeicher ASP

Dieser ist durch ein matrix-förmig aufgebautes Speicherfeld mit elektrisch löschbaren nichtflüchtigen Speicherzellen, insbesondere mit E²PROM-Zweitransistorzellen, gegeben und weist n Spalten und m Zeilen auf. Nach Aktivierung des Schaltungsteils FS ist ein Löschen dieses Speichers nur mit kontrollierter Anzahl der Löschvorgänge möglich, was im Zusammenwirken mit den für die Erfindung als wesentlich bezeichneten weiteren Teilen des Blockschaltbilds gemäß Fig. 1 erreicht wird. Man kan den Speicher so ausgestalten, daß mit den einzelnen Löschvorgängen die Gesamtheit aller Speicherzellen im Anwendungsspeicher jeweils betroffen wird oder daß sich der Löschvorgang nur auf einen z. B. durch Adressierung ausgewählten Teil beschränkt.

2. Kontrollspeicher KS

Dieser ist so ausgebildet bzw. gesteuert, daß er entweder im vornherein oder infolge einer Manipulation an einem Schaltteil FS unlöschbar ist. Er wird aber andererseits vor jedem Löschvorgang im Anwendungsspeicher ASP nach dem Inkrafttreten seiner Unlöschbarkeit durch je ein Kontrollbit beaufschlagt. Dieses wird in je einer Speicherzelle des Kontrollspeichers KS festgehalten. Wie dies im einzelnen erreichbar ist, wird anhand von Fig. 2 noch beschrieben.

3. Adreßdekoder AD

Es handelt sich hier um einen üblichen Dekoder, der in dem noch zu beschreibenden Ausführungsbeispiel gemäß Fig. 2 als sog. « 1-aus-m-Dekoder » ausgebildet ist und zur Ansteuerung der Zeilenauswahlleitungen A des dort aus dem Anwendungsspeicher ASP und dem Kontrollspeicher KS bestehenden E²PROM-Speicherfelds dient. Bei dem in Fig. 2 dargestellten Ausführungsbeispiel ist pro Matrix-zeile jeweils nur ein Speicherwort von 1 Byte und somit eine Anzahl von 8 E²PROM-Zellen und damit nur eine Speicheradresse vorgesehen. Bei größeren Ausführungen können natürlich den einzelnen Matrixzeilen jeweils auch mehrere Adressen zugeordnet sein. In diesem Fall muß der Adreßdekoder AD auch Einfluß auf die Spaltenleitungen $S\nu$ nehmen, was in üblicher Weise geschieht.

### 4. Adreßregister AR

Dieses bildet zusammen mit dem Datenregister DR ein serielles statisches oder quasistatisches und vom Takt Ø gesteuertes Schieberegister, dessen Information durch den einzelnen Takt jeweils um eine Registerzelle in Richtung auf den Datenausgang DA weitergeschoben wird. Die Anzahl der Registerzellen im Teil AR des gemeinsamen Schiebergisters AR + DR hängt von der Zahl der anzuwählenden Adresse ab. Z. B. werden für $2^8 = 256$ Adressen für das Adreßregister AR acht Registerzellen benötigt.

### 5. Datenregister DR

Die Anzahl der Registerzellen im Datenregister ist gleich der Anzahl der mit ihm in Verbindung stehenden Spaltenleitungen $S\nu$. Für den Fall der Länge von 8 Bits für das in den einzelnen Matrixzeilen jeweils einzuspeichernde Datenwort hat man acht Spaltenleitungen und somit ein Datenregister DR aus acht hintereinandergeschalteten Schieberegisterzellen. Dabei ist je eine Zelle unter Berücksichtigung der Reihenfolge im Schieberegister nach Maßgabe der Reihenfolge der Matrixspalten je einer Matrixspalte zugeordnet.

Die Verbindung zwischen den einzelnen Registerzellen im Datenregister DR und dem jeweils zugehörigen Signaleingang $DE\nu$ bzw. Datenausgang $Da\nu$ der jeweils zugehörigen Spaltenleitung $S\nu$ erfolgt über je einen an sich in üblicher Weise ausgestalteten Abschnitt der Spaltenlogik und zwar während der Betriebsphasen, in denen sich der Schiebetakt Ø für das das Datenregister und das Adreßregister bildenden gemeinsamen Schieberegisters auf dem Pegel « 0 » befindet und der Dateninhalt im Adreß- und Datenregister DR bestehen bleibt.

### 6. Steuerlogik SL, Begrenzerlogik BL, Vergleichslogik VL

Während bei den üblichen Ausgestaltungen von E²PROM-Speichern für die Spaltenlogik nur die Vermittlung zwischen den einzelnen Matrixspalten $S\nu$ und dem Datenregister DR bewirkende Spaltenlogik SL erforderlich ist, benötigt man im Falle der Erfindung noch eine speziell ausgeführte Begrenzerlogik BL und die Vergleichslogik VL. Die Begrenzerlogik BL dient der Spannungsbegrenzung bei den vorgesehenen Spaltenleitungen S auf den für MOS-Logikschaltungen typischen Wert von 5 V, die jedoch nur zum Auslesen der in den zu den einzelnen Spaltenleitungen S gehörenden E²PROM-Zellen gespeicherten Daten aber nicht zum Programmieren, also zum Einschreiben von Daten, ausreicht. Diese Begrenzung gilt auch für den Kontrollspeicher KS, wenn dieser mit Speicherzellen derselben Art wie der Anwendungsspeicher ASP aufgebaut ist. Dann muß die genannte Spannungsbegrenzung also aufgehoben werden, sobald die Speicherschaltung mit dem den Schreigbvorgang bzw. Löschvorgang einleitenden Signal Sch bzw. Lö beaufschlagt wird. Eine vorteilhafte Möglichkeit hierzu wird noch anhand von Fig. 2 beschrieben.

Schließlich enthält die Spaltenlogik pro Spalte $S\nu$ noch je einen zur Vergleichslogik VL gehörenden Abschnitt, der zum Vergleich zwischen den Daten des Kontrollspeichers KS und den Daten im Datenregister DR dient. Er ist so ausgebildet, daß er den Zustand « 1 » und den Zustand « 0 » im zugehörigen Teil des Kontrollspeichers KS erkennt, und dient der Steuerung des Ablaufs der Löschung mit Zählkontrolle. Dabei wird durch Erkennen des Zustands « 1 » ein freies Bit festgestellt und durch Erkennen des Zustands « 0 » ein die zugehörige Spaltenleitung betreffender Schreibvorgang überprüft. Auch hier ist in Fig. 2 eine geeignete Ausgestaltung gegeben.

### 7. Ablaufsteuerung AST

Dieser Schaltungsteil hat die Aufgabe, den Schreib-Lese-Betrieb des Kontrollspeichers KS zu steuern. Er wird zu diesem Zweck mit dem — zugleich für das Adreßregister AR und das Datenregister DR vorgesehenen-Schiebetakt Ø zurückgesetzt. Er wird außerdem von der Spaltenlogik her durch den Ausgang der Vergleichslogik VL, der für alle Spaltenleitungen $S\nu$ gemeinsam zuständig ist, gesteuert. Auch hier kann bezüglich einer vorteilhaften Ausgestaltung auf Fig. 2 hingewiesen werden.

### 8. Zeilensteuerlogik ZSL (= Gatesteuerlogik)

Diese legt unter Vermittlung der Programmierleitungen $P\mu$ der vorgesehenen Matrixzeilen adreßabhängig die Spannung auf die Steuergates des Speichertransistors in den einzelnen E²PROM-Zellen fest.

Diese Spannung ist im folgenden mit $U_P$ bezeichnet. Zum Beispiel beträgt $U_P$ nur 5 V beim Auslesen und etwa 20 V, wenn gelöscht werden soll. Außerdem verhindert die Zeilensteuerlogik ZSL ein Löschen der Daten im Kontrollspeicher KS sowie unter bestimmten Voraussetzungen auch ein Löschen im Anwendungsspeicher ASP (z. B. wird dieses Löschen im Anwendungsspeicher ASP bei der in Fig. 2 dargestellten Schaltung verhindert, wenn am Ausgang Q2 von FF2 keine « 1 » anhängig ist).

9. Schaltungsteil mit Schmelzsicherung FS

Wie bereits oben bemerkt, ermöglicht dieser Schaltungsteil bei intakter Schmelzsicherung auch das Löschen im Kontrollspeicher KS, so daß dieser auch in dieser Beziehung getestet werden kann. Erst nach dem Durchtrennen der Schmelzsicherung durch ein Zündsignal Zü wird der Kontrollspeicher KS hinsichtlich weiterer Löschvorgänge permanent gesperrt. Hinsichtlich der Ausbildung des Schaltungsteils FS im Falle eines — ebenfalls aus $E^2$PROM-Zellen bestehenden Kontrollspeichers — wird ebenfalls auf die nun zu beschreibende Fig. 2 hingewiesen.

Wie aus Fig. 2 ersichtlich, bestehen die dort verwendeten Zweitransistor-$E^2$PROM-Speicherzellen aus zwei hintereinandergeschalteten selbstsperrenden MOS-Feldeffekttransistoren a und b vom gleichen Kanalleitungstyp, insbesondere vom n-Kanaltyp, der auch bei den übrigen Transistoren der in Fig. 2 dargestellten Schaltung einschließlich der Transistoren in den vorgesehenen logischen Gattern und den beiden Flip-Flops bevorzugt aus bekannten Gründen angewendet wird. Dabei liegt der eine Transistor a der die einzelnen $E^2$PROM-Zellen bildenden Transistorpaare a b mit seinem Drain an der zugehörigen Spaltenleitung $S\nu$ und mit seinem Gate an vom Adreßdekoder AD gesteuerten Auswahlleitung $A\mu$ derjenigen Zeile $\mu$ des Speicherfelds, zu der die betreffende $E^2$PROM-Zelle gehört. Der Sourceanschluß des als normaler Schalttransistor ausgebildeten und für die folgenden Ausführungen als Auswahltransistor bezeichneten Transistors a ist unmittelbar mit dem Drain des Transistors b der betreffenden $E^2$PROM-Zelle verbunden, dessen Source am Bezugspotential, also an Masse, liegt. Der als Speichertransistor dienende Transistor b weist neben dem mit der zugehörigen Programmierleitung $P\mu$ verbundenen Steuergate noch ein floating Gate auf. Außerdem ist die Gateisolation zwischen dem schwebenden Gate und dem Halbleitersubstrat an einer — üblicherweise als Löschfenster bzw. Dünnoxyd — bezeichneten Stelle besonders dünn, so daß dort aufgrund des Fowler-Nordheim-Tunneleffekts eine Aufladung (Löschvorgang) bzw. Entladung (Schreibvorgang) des Floating Gates über das — insbesondere aus monokristallinem Silicium bestehenden — Halbleitersubstrats möglich ist. Bezeichnet man die zwischen dem Drain des Auswahltransistors a und der Source des Speichertransistors b liegende Spannung mit $U_D$ sowie die auf die einzelnen Zeilenleitungen zu gebende (und auf Masse bezogene) Adreßspannung mit $U_A$, so erhält man in Verbindung mit der oben eingeführten Spannung $U_P$ zwischen dem Steuergate des Speichertransistors b und Masse für die einzelnen Betriebsarten die aus der folgenden Tabelle ersichtlichen Werte :

| | $U_A$ | $U_P$ | $U_D$ |
|---|---|---|---|
| Löschen nach "1" | 20 V | 20 V | 0 V |
| Schreiben nach "0" | 20 V | 0 V | 20 V |
| Kein Schreiben | 20 V | 0 V | 0 V |
| Lesen | 20 V | $U_{les}$ | "0"/"1" |

Die Lesespannung $U_{les}$ beträgt normalerweise etwa 5 V. Für den Betrieb der Logik wird bei deren Ausgestaltung in n-Kanal-MOS-Technik ebenfalls eine Versorgungspannung von 5 V benötigt.

Die oben angegebene Anschaltung der beiden Transistoren a und b für die einzelnen $E^2$PROM-Zellen ist aus Fig. 2 ersichtlich. Dabei ist im Interesse der Übersichtlichkeit nur eine einzige Spalte $S\nu$ und an dieser nur je eine Speicherzelle aus dem Anwendungsspeicher ASP und eine Speicherzelle aus dem Kontrollspeicher KS gezeichnet. Dabei ist allerdings zu bemerken, daß es in vielen Fällen genügt, wenn der Kontrollspeicher KS nur durch eine einzige Zeile der aus dem Anwendungsspeicher ASP und dem Kontrollspeicher KS gebildeten Speichermatrix gegeben ist, so daß pro Spaltenleitung S jeweils nur eine $E^2$PROM-Zelle des Kontrollspeichers dann vorgesehen ist. Die Fig. 2 ist schaltungsmäßig auf diesen Fall ausgerichtet. Beispielsweise kann die Anzahl n der Spalten gleich 8, die Anzahl n der Zeilen im Anwendungsspeicher ASP gleich 31 sein, während die 32. Zeile der Speichermatrix den Kontrollspeicher KS bildet.

Jede Spaltenleitung wird unter Vermittlung je eines Lastelements am einen Ende mit der Klemme für eine Versorgungspannung von + 20 V verbunden, während das andere Ende der Spaltenleitung je einen Datenausgang $DA\nu$ der Speichermatrix bildet. Das Lastelement, das jeweils den einzelnen Spaltenleitungen $S\nu$ zugeordnet und für alle Spaltenleitungen gleich bemessen ist, ist durch einen als Widerstand in üblicher Weise geschalteten MOS-Feldeffekttransistor 10 vom selbstleitenden Typ gegeben, dessen Drain an der besagten Versorgungsklemme und dessen Gate und Source an der jeweils zugehörigen

Spaltenleitung S$\nu$ liegen.

Um den unter Ziff. 5 genannten Anforderungen für die Spaltenlogik gerecht zu werden, sind bei der in Fig. 2 dargestellten Ausbildung die sie bildenden Teile SL, VL und BL in folgender Weise aufgebaut :

a) Steuerlogik SL

Der Ausgang DA$\nu$ der $\nu$-ten Spaltenleitung S ist neben der oben angegebenen üblichen Verbindung zum Datenregister DR noch mit einer durch die Serienschaltung zweier selbstsperrender MOS-Feldeffekttransistoren 8 und 9 gegebenen Verbindung zum Bezugspotential versehen. Dabei ist der mit seinem Drain an dem Datenausgang DA$\nu$ liegende Transistor 9 — gemeinsam mit dem entsprechenden Transistor 9 in den zu den übrigen Spalten S$\nu$ gehörenden Teilen der Spaltenlogik — durch das oben erwähnte und extern der Schaltung zugeführte Schreibsignal Sch und der am Bezugspotential mit seiner Source liegende Transistor 8 der besagten Reihenschaltung durch den jeweils der betreffenden Matrixspalte zugeordneten und vom Datenregister DR beaufschlagten Dateneingang DE$\nu$ gesteuert. Die Gesamtheit der den einzelnen Spaltenleitungen jeweils zugeordneten Transistorpaare 8 und 9 bilden die in üblicher Weise ausgestaltete Steuerlogik SL.

b) Vergleichslogik VL

Diese enthält ein für alle Spalten zuständiges gemeinsames Ausgangsgatter G4 und eine der Anzahl n der Spaltenleitungen S$\nu$ entsprechende Anzahl von einander gleichen Schaltungsteilen, die jeweils je einer Matrixspaltenleitung S$\nu$ in der aus Fig. 2 ersichtlichen Weise zugeordnet sind. Dabei ist der Datenausgang Da$\nu$ der betreffenden Spaltenleitung S$\nu$ über einen Inverter i1 mit dem einen Eingang eines NOR-Gatters G3 verbunden dessen anderer Eingang von dem für die betreffende Matrixspalte $\nu$ zuständigen Dateneingang DE$\nu$ gesteuert ist. Der Ausgang des der genannten Matrixspalte zugeordneten NOR-Gatters G3 liegt an einem Eingang des — ebenfalls als NOR-Gatter ausgebildeten — Ausgangsgatters G4, dessen restliche Eingänge in der soeben beschriebenen Weise jeweils von dem NOR-Gatter G3 des einer anderen Spaltenleitung S zugeordneten Teils der Vergleichslogik VL gesteuert ist, derart, daß zwischen jeder der vorgesehenen Spaltenleitungen S und dem besagten Ausgangsgatter G4 eine Verknüpfung der beschriebenen Art vorhanden ist.

Man erkennt aufgrund der beschriebenen Ausbildung der Vergleichslogik VL unmittelbar, daß eine « 1 » an einem Datenausgang DA zu einer « 0 » am Ausgang des zugehörigen Inverters i1 und damit zu einer « 1 » am Ausgang des zugehörigen NOR-Gatters G3 führt, wenn am zugehörigen Dateneingang DE$\nu$ zugleich eine « 0 » anhängig ist. Für alle anderen Kombinationen DA$\nu$ und DE$\nu$ wird am Ausgang von G3 eine « 0 » erzeugt. Der Zustand « 1 » am Datenausgang DA$\nu$ der einzelnen Spaltenleitung S$\nu$ bedeutet, daß sich in der betreffenden Spalte $\nu$ eine adressierte E$^2$PROM-Zelle befindet, die zudem noch im gelöschten Zustand ist. Dagegen bedeutet der Zustand « 0 » für den Datenausgang DA$\nu$, daß eine zu der betreffenden Spalte gehörende und adressierte Speicherzelle auf « 0 » geschrieben ist. Eine « 0 » am Ausgang von G4 besagt, daß wenigstens auf einer Spalte $\nu$ eine noch gelöschte Speicherzelle, angezeigt durch DA$\nu$ = « 1 », mit einer Schreibbedingung DE$\nu$ = « 0 » im Datenregister zusammentrifft. Eine « 1 » am Ausgang des gemeinsamen NOR-Gatters G4 besagt, daß der zuletzt genannte Zustand nicht zutrifft. Der Ausgang des NOR-Gatters G4 dient zur Beaufschlagung der Ablaufsteuerung AST, die im wesentlichen durch die beiden RS-Flip-Flops FF1 und FF2 gegeben ist.

c) Begrenzerlogik BL

Zur Spaltenlogik entsprechend Ziffer 5 gehört außerdem die Begrenzerlogik BL, die gemäß Fig. 2 einerseits durch die Ablaufsteuerung AST und andererseits vom Kontrollspeicher KS her gesteuert ist. Dieser Schaltungsteil BL enthält drei NAND-Gatter G1, G5 und G6, einen Schaltertransistor 5 und pro Spaltenleitung S wenigstens eine Diode, die eine Verbindung von den einzelnen Spaltenleitungen S$\nu$ zum Schalttransistor 5 und über diesen zum Bezugspotential (Masse) darstellt. Zu diesem Zweck liegt die Spaltenleitung S$\nu$ an der Anode der ihr zugeordneten Diode (gegeben durch den MOS-FET 7) und deren Kathode entweder unmittelbar am einen stromführenden Anschluß des Schaltransistors oder — besser — an der Anode einer weiteren — der Verbindung zwischen dem Schalttransistor 5 zu jeder der vorgesehenen Spaltenleitungen S$\nu$ gemeinsamen und durch einen MOS-FET 6 gegebenen — Diode liegt, die ihrerseits über ihre Kathode mit dem einen stromführenden Anschluß des Schalttransistors 5 verbunden ist. Der andere stromführende Anschluß des Schalttransistors 5 liegt am Bezugspotential (Masse). Die jeweils eine Diode darstellenden selbstsperrenden MOS-Feldeffekttransistoren 7 bzw. 6 sind in üblicher Weise als Diode geschaltet, indem das Gate und der Drain des betreffenden Transistors miteinander verbunden sind, so daß infolge des hierdurch bedingten Kurzschlusses des die Drainzone des betreffenden Transistors umgebenden pn-Übergangs dessen Drain die Anode und dessen Source die Kathode der durch den Transistor realisierten Diode darstellt.

Zur Steuerung des Schalttransistors 5 ist nun der Ausgang des NAND-Gatters G1 vorgesehen, dessen einer Eingang von dem bereits genannten externen Schreibsignal Sch und dessen zweiter Eingang vom Ausgang des NAND-Gatters G6 gesteuert ist. Der eine Eingang des zuletzt genannten NAND-Gatters G6 ist

## 0 123 177

mit der Auswahlleitung $A_{KS}$ des Kontrollspeichers KS unmittelbar verbunden, so daß dieser Eingang entsprechend dem Betriebszustand der Auswahlleitung $A_{KS}$ entweder auf dem Pegel « 0 » oder auf dem Pegel « 1 » liegt. Der andere Eingang des zweiten NAND-Gatters G6 wird vom Ausgang des dritten NAND-Gatters G5 gesteuert, dessen einer Eingang ebenfalls von der Auswahlleitung $A_{KS}$ des Kontrollspeichers KS und dessen anderer Eingang von der Ablaufsteuerung AST durch den nichtinvertierten Ausgang Q1 des einen in ihr vorgesehenen RS-Flip-Flops FF1 gesteuert ist.

Ersichtlich wird der Schalttransistor 5 durchlässig, wenn am Ausgang des ihn steuernden NAND-Gatters G1 eine « 1 » anhängig ist. Dies ist entweder der Fall, wenn das Schreibsignal Sch und/oder der Ausgang des NAND-Gatters G6 auf dem Pegel « 0 » liegt. Das letztere ist der Fall, wenn eine Adresse Aks angewählt ist und wenn gleichzeitig sich das RS-Flip-Flop FF1 in der Ablaufsteuerung AST im Resetzustand befindet, so daß an Q1 und damit an dem anderen Eingang des NAND-Gatters G5 eine « 0 » anhängig ist. Ist der Schalttransistor 5 leitend, so bedeutet dies aufgrund der angegebenen Schaltungsweise, daß von den mit adressierten Speicherzellen versehenen Spaltenleitungen S$\nu$ Strom über den Schalttransistor 5 zum Bezugspotential fließt. Wegen des Lastwiderstands 10 in den einzelnen Spaltenleitungen S$\nu$ sinkt dadurch die Spannung $U_D$ an den einzelnen E$^2$PROM-Zellen der betreffenden Spaltenleitung S$\nu$ im Vergleich zu dem im gesperrten Zustand des Transistors 5 geltenden Wert ab.

Offensichtlich sind für den Einsatz der für alle Spalten des Speicherfelds zuständigen Begrenzerlogik BL die beiden Betriebszustände des RS-Flip-Flops FF1 in der Ablaufsteuerung AST bestimmend, indem im gesetzten Zustand dieses Flip-Flops der von Q1 gesteuerte Eingang des NAND-Gatters G5 eine « 1 » und im Resetzustand eine « 0 » erhält.

Damit es bei Abwesenheit eines Schreibsignals Sch zu einer « 1 » am Ausgang des NAND-Gatters G1 und damit zu dem leitenden Zustand des Schalttransistors 5 kommt, ist ersichtlich der logische Zustand am Ausgang von G6 und der dieses NAND-Gatter G6 steuernden Eingänge desselben ohne Belang. In diesem Fall ist also die Begrenzerlogik BL in Tätigkeit. Bei Anwesenheit des Schreibsignals Sch ist hingegen für den Zustand des Schalttransistor 5 das NAND-Gatter G6 verantwortlich, da durch eine « 1 » an dessen Ausgang der Transistor 5 gesperrt wird. Eine « 1 » am Ausgang von G6 ist jedoch dann gegeben, wenn an wenigstens einem der beiden Eingänge dieses NAND-Gatters G6 eine « 0 » anhängig ist. Befindet sich die Adreßleitung $A_{KS}$ im Kontrollspeicher auf dem Zustand « 1 », so ist offensichtlich der Zustand an Q1 dafür verantwortlich, ob der Transistor 5 leitend oder gesperrt ist. Bei einer « 1 » an Q1 erhält der Ausgang von G5 den Zustand « 0 », wenn gleichzeitig auch $A_{KS}$ auf « 1 » liegt. Es fällt dann am Ausgang von G6 eine « 1 » an, so daß der Schalttransistor 5 bei Sch = « 0 » leitet und bei Sch = « 1 » gesperrt ist. Ist dagegen $A_{KS}$ = « 0 », so folgt ebenfalls für den Ausgang von G6 eine « 1 », so daß wiederum bei Anwesenheit eines Schreibsignals Sch = « 1 » der Schalttransistor « 5 » gesperrt und bei Abwesenheit eines Schreibsignals (also Sch = « 0 ») der Transistor 5 leitend ist. Es ist also in jedem Fall bei Anwesenheit eines Signals Sch die Begrenzerlogik BL ausgeschaltet, wenn am Ausgang Q1 des Flip-Flops FF1 eine « 1 » anhängig ist. Die Aufgabe des Flip-Flops FF1 in der Ablaufsteuerung AST ist somit u. a. die Aufhebung der an sich durch die Begrenzerlogik zwangsläufig bedingten Spannungsbegrenzung auf den Spaltenleitungen S zu steuern, wenn die Adresse $A_{KS}$ des Kontrollspeichers angewählt ist. Zu bemerken ist in diesem Zusammenhang noch, daß die Adressen im Anwendungsspeicher ASP ohne Einschränkung geschrieben werden, während ein Schreiben im Kontrollspeicher KS auch vom Betriebszustand der Ablaufsteuerung abhängig ist.

d) Ablaufsteuerung AST und Zeilensteuerlogik ZSL

Die Ablaufsteuerung AST enthält außer dem genannten RS-Flip-Flop FF1 ein zweites RS-Flip-Flop FF2 sowie drei und-Gatter G7, G8 und G9, ein ODER-Gatter G10 sowie zwei Inverter i2 und i4. Dabei ist gemäß Fig. 2 folgende Schaltweise vorgesehen :

Zunächst ist das — zugleich für die Taktsteuerung des Schieberegisters AR, DR vorgesehene — Taktisignal Ø zusammen mit einem externen Resetsignal RES über das ODER-Gatter G10 an den Rücksetzeingang R1 des ersten Flip-Flops FF1 und an den Rücksetzeingang R2 des zweiten Flip-Flops FF2 gelegt. Der Setzeingang S1 des ersten Flip-Flops FF1 wird vom Ausgang des UND-Gatters G9 beaufschlagt, dessen einer Eingang durch ein externes Vergleichssignal V und dessen anderer Eingang durch den Ausgang der Vergleichslogik VL, also dem Ausgang des NOR-Gatters G4, über den In i2 gesteuert ist. Der nichtinvertierte Ausgang Q1 des ersten Flip-Flops FF1 liegt, wie bereits im Zusammenhang mit der Begrenzerlogik BL festgestellt wurde, an dem einen Eingang des NAND-Gatters G5 dieser Logik. Er liegt außerdem an dem einen Eingang eines UND-Gatters G8, dessen zweiter Eingang unmittelbar durch das Ausgangs-NOR-Gatter G4 der Vergleichslogik VL und dessen dritter Eingang durch das genannte externe Vergleichssignal — und zwar unmittelbar — gesteuert ist. Der Ausgang des UND-Gatters G8 ist mit dem einen Eingang eines UND-Gatters G7 verbunden, dessen zweiter Eingang unter Vermittlung eines Inverters i4 von der Adreßleitung $A_{KS}$ im Kontrollspeicher KS und dessen letzter Eingang vom nichtinvertierten Ausgang Q1 des ersten Flip-Flops FF1 gesteuert ist.

Der nichtinvertierte Ausgang Q2 des zweiten Flip-Flops FF2 liegt an einem — an seinem anderen Eingang durch ein externes Löschsignal Lö zu beaufschlagendes — NAND-Gatter G2, dessen Ausgang das Gate eines selbstsperrenden MOS-Feldeffekttransistors 2 steuert. Dieser Feldeffekttransistor 2 bildet eine Verbindung zwischen dem Bezugspotential und einem zum Versorgungspotential + 20 V führenden

7

# 0 123 177

Spannungsteiler 3, 4. Der Spannungsteiler 3, 4 besteht aus einem selbstsperrenden MOS-Feldeffekttransistor 3, dessen Sourceanschluß über den MOS-FET 2 mit dem Bezugspotential (Masse) verbunden ist und dessen Drain und Gate mit der Source und dem Gate des als selbstleitender MOS-FET ausgebildeten Transistors 4 verbunden ist, dessen drain an der Klemme für die Versorgungsspannung von + 20 V liegt. Der Teilerpunkt zwischen den beiden Transistoren 3 und 4 des Spannungsteilers dient der Beaufschlagung der Programmierleitungen Pµ des Anwendungsspeichers ASP und unter Vermittlung eines weiteren MOS-Feldeffekttransistors 12 vom selbstleitenden Typ der Beaufschlagung der Programmierleitung $P_{KS}$ (und damit der Steuergates der jeweils zugehörigen Speichertransistoren b) im Kontrollspeicher. Der Transistor 2, der Spannungsteiler 3 und 4 sowie der Verbindungstransistor 12 sowie das NAND-Gatter G2 bilden in der Ausgestaltung gemäß Fig. 2 die Zeilensteuerlogik ZSL, zu der noch ein selbstsperrender und durch das Schreibsignal Sch gesteuerter MOS-Feldeffekttransistor 1 zu zählen ist, welcher die Aufgabe hat, im Falle der Betriebsart « Schreiben » die Programmierleitungen Pµ des Anwendungsspeichers (und bei gutleitendem Verbindungstransistor 12 des Kontrollspeichers KS) mit dem Bezugspotential zu verbinden. Schließlich gehört auch noch die den Verbindungstransistor 12 steuernde Schaltung FS zu der Zeilensteuerlogik ZSL.

Die Steuerung des Verbindungstransistors 12 (der wie oben festgestellt selbstleitend ist) erfolgt durch den Teilerpunkt eines weiteren Spannungsteilers, der aus dem Transistor 15 und dem Transistor 14 besteht. Dabei liegt der als selbstleitender MOS-Feldeffekttransistor ausgestaltete Transistor 15 mit dem Drain an der mit einer Spannung von 20 V beaufschlagten Versorgungsklemme und mit seinem Gate- und Sourceanschluß am Drain und am Gate des Transistors 14. Dieser ist selbstsperrend und liegt über seiner Source und einem weiteren selbstsperrenden Transistor 13 am Bezugspotential. Das Gate des zuletzt genannten MOS-Feldeffekttransistors 13 ist vom Austang eines Inverters i3 gesteuert. Dieser liegt eingangsseitig am Ausgang des Schaltungsteils FS.

Dieser Ausgang ist durch einen Knoten gegeben, von dem aus zwei zueinander parallel liegende MOS-FET's zum Bezugspotential und die Schmelzsicherung Si zu einem Anschluß für eine Zündspannung $U_z$ führen. Dabei ist der eine Transistor 11 vom selbstsperrenden Typ und wird durch ein Zündsignal Zü gesteuert. Der andere transistor 16 ist hingegen selbstleitend und liegt auch mit seinem Gate am Bezugspotential.

Solange die Schmelzsicherung Si intakt ist, ist bei anliegendem $U_z$ auch am Ausgang des Inverters i3 eine « 0 » anhängig, so daß der Transistor 13 gesperrt ist. Dies bedeutet, daß der selbstleitende Verbindungstransistor 12 weit geöffnet ist, da dann die ihm durch den Teilerpunkt zwischen den Transistoren 14 und 15 gelieferte Spannung genügend hoch ist. Anders ist die Situation, wenn infolge der Anwendung des Zündsignals Zü die Sicherung Si aufgetrennt ist. Dann liegt der Ausgang des Inverters i3 auf « 1 » und der Transistor 13 befindet sich im leitenden Zustand. Dadurch sinkt das Potential am Gate des Verbindungstransistors 12, so daß dieser sich nahe dem gesperrten Zustand befindet. Dadurch ist der aus den beiden Widerstandstransistoren 3 und 4 bestehende Spannungsteiler nur noch in der Lage, an die Programmierleitung $P_{KS}$ im Kontrollspeicher eine niedrige und daher nur noch zum Auslesen ausreichende Spannung zur Verfügung zu stellen.

Zum Löschen der Zeilen des Speichers ASP (und bei intakter Schmelzsicherung Si im Schaltungteil FS auch des Kontrollspeichers KS) ist es erforderlich, daß der Transistor 2 in den sperrenden Zustand kommt. Hierzu ist notwendig, daß am nichtinvertierten Ausgang Q2 des Löschflip-Flops FF2 als auch an dem für das Löschsignal Lö zuständigen Eingang des NAND-Gatters G2 je eine « 1 » anhängig ist. Damit das Löschflip-Flop FF2 gesetzt wird, muß auf der Auswahlleitung $A_{KS}$ des Kontrollspeichers KS eine « 0 » anhängig sein, so daß der Kontrollspeicher adressiert ist. Dadurch wird eine « 1 » an den einen Eingang des UND-Gatters G7 gelegt. Weiter muß zum Setzen des Flip-Flops FF2 am Ausgang der Vergleichslogik VL, also am Ausgang des NOR-Gatters G4 eine « 1 » anhängig sein. Schließlich muß sich auch das erste Flip-Flop FF1 im gesetzten Zustand befinden, da auch dieser für die Steuerung des UND-Gatter G7 mit zuständig ist. Als letzte Bedingung für das Setzen von FF1 ist noch die Anwesenheit des Vergleichssignals V zu nennen, da erst dann alle Bedingungen erfüllt sind, die für eine « 1 » am Ausgang des UND-Gatters G7 notwendig sind. Eine « 1 » am Ausgang der Vergleichslogik VL, also am Ausgang von G4 ist wiederum nur dann möglich, wenn am Ausgang aller NOR-Gatter G3 in der Vergleichslogik VL eine « 0 » anhängig ist. Dies ist wiederum nur dann der Fall, wenn entweder am Dateneingang DEν aller Matrixspalten Sν eine « 1 » oder am zugehörigen Datenausgang DAν eine « 0 » anhängig ist. Damit sind die Bedingungen für den Löschprozeß aufgezeigt.

Für den Schreibbetrieb wird das Schreibsignal Sch benötigt, welches außer der Steuerung des in der Begrenzerlogik BL vorgesehenen NAND-Gatters G1 noch den oben erwähnten selbstsperrenden Transistors 1 steuert, der die Verbindung zwischen der Gesamtheit der Programmierleitungen im Anwendungsspeicher ASP und dem Bezugspotential bildet und der daher als Entladetransistor wirksam ist. Liegt ein Schreibsignal Sch an, so liegt an den Programmierleitungen Pµ eine Spannung $U_P$ von etwa 0 V.

Wenn weder ein Löschsignal Lö noch ein Schreibsignal Sch ansteht, dann ist der Transistor 2 leitend und der Transistor 1 gesperrt. Die Spannung an den Programmierleitungen Pµ hat unter diesen Bedingungen den durch die Transistoren 3 und 4 gegebenen Teilerwert von etwa 5 V (= Lesespannung $U_{les}$).

Wenn mit $Q_2 =$ « 1 » das Löschsignal Lö ansteht und das Schreibsignal Sch den Pegel « 0 » hat, so

8

ist sowohl der Transistor 1 als auch der Transistor 2 gesperrt. Die Spannung $U_P$ an den Programmierleitungen $P_\mu$ (und $P_{KS}$) floated über den Widerstandstransistor 4 bis zum Wert von 20 V hoch, so daß ein Löschvorgang möglich ist.

Beim Schreiben wird außerdem über das NAND-Gatter G1 der Transistor 5 gesperrt, so daß für alle Spaltenleitungen $S_v$ die Wirkung der durch die Begrenzerlogik BL bedingte Spannungsbegrenzung aufgehoben wird. Deshalb kann sich dann die Spannung an den einzelnen Spaltenleitungen $S_v$ in Abhängigkeit von der aus dem Datenregister DR an den jeweils zugehörigen Dateneingang $DE_v$ gelieferten Dateninformation entweder auf den Wert von 0 V oder auf den Wert der Maximalspannung von 20 V einstellen.

Die erfindungsgemäße Wirkungsweise nach Fig. 1 und 2 hängt von der korrekten zeitlichen Dauer und Reihenfolge der Steuersignale ab, die nach Fig. 2 noch von außen eingegeben werden müssen (siehe Fig. 3), sie können entweder von einem Rechner zugeführt werden oder sie werden in einer zusätzlichen Steuerschaltung mit auf dem Chip integriert. LOE und SCH müssen eine zum Löschen bzw. Schreibender Speicherzelle ausreichende Dauer besitzen. V ist ein kurzes Zeitintervall, in dem das Ergebnis einer Vergleichsoperation in die Flip Flops der Ablaufsteuerung übernommen werden kann. $\phi$ ist das Taktsignal des Schieberegisters, das auch die Ablaufsteuerung zurücksetzt. Zwischen den einzelnen Steuersignalen müssen zeitliche Abstände vorgesehen sein, damit sich in der gesamten Schaltung jeweils ein stationärer Zustand einstellen kann.

Nach Fig. 3 ergibt sich folgender zeitlicher Signalverlauf. Zur Zeit t0 stellt sich mit dem letzten Taktimpuls $\phi$ ein stabiler Zustand im Schieberegister ein. Aufgrund der eingestellten Adresse Aks des Kontrollregisters und der angegebenen Daten DEV im Datenregister liegt bei ordnungsgemäßer Durchführung am Ausgang von G4 eine « 0 ». Mit einem ersten Freigabeimpuls V zur Zeit t1 wird das Flipflop 1 gesetzt und Q1 geht auf « 1 ». Dadurch wird die Begrenzungslogik der Spaltenspannung beim Schreiben während Sch = « 1 » aufgehoben (Zeitpunkt t2). Durch das Schreiben geht die eingestellte Speicherzelle DEV nach « 0 » und der Ausgang von G4 auf 1. Während eines weiteren Freigabeimpulses V zur Zeit t3 wird auch Q2 gesetzt und damit die Löschsperre aufgehoben. Zur Zeit t4 und während des Löschsignals LÖ wird der Anwenderspeicher ASP gelöscht. Der erste Taktimpuls $\phi$ ändert nicht nur Daten und Adressen sondern setzt auch beide Flipflops zurück.

Um ein Löschen des Kontrollspeichers KS zu verhindern, sind alle Speicherzellen des Kontrollspeichers KS im geschriebenen Zustand entladen. Aufgrund dieser Maßnahme bewirkt eine Entladung der Speicherzellen, beispielsweise um den Speicherinhalt in betrügerischer Absicht zu manipulieren, kein Zurücksetzen in den ursprünglichen unbeschrieben Zustand.

**Patentansprüche**

1. Verfahren zum Betreiben eines als nichtflüchtigen Schreib-Lese-Speicher ausgebildeten Anwendungsspeichers (ASP) in Verbindung mit einem die Anzahl der am Anwendungsspeicher (ASP) vorgenommen Löschvorgänge festhaltenden Kontrollspeicher (KS), dadurch gekennzeichnet, daß vor jedem Löschvorgang ein Kennzeichen unlöschbar in einen unbeschriebenen Speicherplatz des Kontrollspeichers (KS) eingespeichert wird, und daß ohne eine derartige vorherige Abspeicherung des Kennzeichens jeder Löschvorgang unterbunden wird.

2. Verfahren nach Anspruch 1, dadurch gekennzeichnet, daß der Kontrollspeicher (KS) aufgrund einer mit ihm verbundenen Logikschaltung (ZSL/FS) aus einem löschbaren Speicher in einen — dann permanent — nicht löschbaren Speicher umgewandelt werden kann.

3. Verfahren nach Anspruch 1 oder 2, dadurch gekennzeichnet, daß aus dem zeilenweise zu adressierenden Anwendungsspeicher (ASP) und dem ebenfalls zeilenweise zu adressierenden Kontrollspeicher (KS) eine gemeinsame Matrix gebildet wird, in dem mindestens eine der Spaltenleitungen ($S_v$) dieser Speichermatrix sowohl Speicherzellen des Anwendungsspeichers (ASP) als auch wenigstens eine Speicherzelle des Kontrollspeichers (KS) aufweist.

4. Verfahren nach einem der vorhergehenden Ansprüche, dadurch gekennzeichnet, daß die Speicherzellen in geschriebenem Zustand entladen sind, so daß auch durch eine Entladung der Speicherzellen ein Löschen des Kontrollspeichers (KS) nicht möglich ist.

5. Verfahren nach einem der vorhergehenden Ansprüche, dadurch gekennzeichnet, daß das Schreiben des Kontrollspeichers (KS) von einer Inhaltsüberprüfung des Kontrollspeichers (KS) abhängig ist.

6. Vorrichtung zur Durchführung des Verfahrens nach einem der vorhergehenden Ansprüche, mit
— einem Anwendungsspeicher (ASP) und
— einem Kontrollspeicher (KS), jeweils in Form eines nichtflüchtigen Schreib-Lese-Speichers, wobei der Kontrollspeicher (KS) nicht löschbar ist,
gekennzeichnet durch
— eine Ablaufsteuerung (AST),
— eine Begrenzerlogik (BL), die in Verbindung mit der Ablaufsteuerung (AST) und einem Schreibsignal (Sch) ein Einschreiben in den Kontrollspeicher (KS) ermöglicht, wenn dieser noch mindestens eine unbeschriebene Speicherzelle enthält,

— eine Zeilensteuerlogik (ZSL), die in Verbindung mit der Ablaufsteuerung (AST) und einem Löschsignal (Lö) ein gesteuertes Löschen des Anwendungsspeichers (ASP) erlaubt, wenn ein Einschreiben in den Kontrollspeicher (KS) erfolgt ist und
— eine Vergleichslogik (VL) zur Überprüfung des Kontrollspeichers (KS) auf mindestens eine unbeschriebene Speicherzelle bzw. ein erfolgtes Einschreiben,
wobei der Anwendungsspeicher (ASP) und der Kontrollspeicher (KS) jeweils über Spalten — ($S_\nu$) und Zeilenleitungen ($A_\mu$, $A_{KS}$) zugängliche Speicherzellen aufweisen.

7. Vorrichtung nach Anspruch 6, dadurch gekennzeichnet, daß jede Spaltenleitung ($S_\nu$) am einen Ende über je einen Lastwiderstand (10) mit einer ein Versorgungspotential (20 V) liefernden Klemme und an dem einen Datenausgang ($DA_\nu$) der betreffenden Spalte bildenden anderen Ende neben einer Verbindung zu einem Datenregister (DR) noch eine über zwei in Serie liegende selbstsperrende MOS-Feldeffekttransistoren (9, 8) gegebene Verbindung zum Bezugspotential aufweist, daß dabei der eine dieser Transistoren (8) durch einen Signaleingang ($DE_\nu$) der betreffenden Matrixspalte ($\nu$) und der andere mit seinem Drain an der betreffenden Spaltenleitung ($S_\nu$) liegende Transistor (9) gemeinsam mit den ihm entsprechenden Transistoren (9) an den anderen Spaltenleitungen durch ein externes Schreibsignal (Sch) gesteuert ist.

8. Vorrichtung nach Anspruch 7, dadurch gekennzeichnet, daß der jeweils einer Spaltenleitung ($S_\nu$) zugeordnete Eingangsteil der Vergleichslogik (VL) aus einem eingangsseitig mit dem Datenausgang ($DA_\nu$) der einzelnen Spaltenleitung ($S_\nu$) verbundenen Inverter (i1) besteht, dessen Ausgang zusammen mit dem der betreffenden Spaltenleitung (S) zugeordneten Dateneingang (DE) zur Steuerung eines NOR-Gatters (G3) vorgesehen ist und daß die jeweils den Ausgang eines je einer Spaltenleitung zugeordneten Eingangsteils der Vergleichslogik (VL) bildenden NOR-Gatters (G3) zur Steuerung je eines Eingangs eines den gemeinsamen Ausgangsteil der Vergleichslogik (VL) bildenden weiteren NOR-Gatters (G4) gelegt und dessen Ausgang zur Beaufschlagung der Ablaufsteuerung (AST) vorgesehen ist.

9. Vorrichtung nach Anspruch 8, dadurch gekennzeichnet, daß in der Ablaufsteuerung (AST) ein erstes RS-Flip-Flop (FF1) an seinem Setzeingang (S1) und außerdem ein zweites RS-Flip-Flop (FF2) an seinem Setzeingang (S2) durch den Ausgang des gemeinsamen NOR-Gatters (G4) der Vergleichslogik (VL) gesteuert ist, daß hierzu der Ausgang des gemeinsamen NOR-Gatters (G4) über einen Inverter (i2) an den einen Eingang eines an seinem anderen Eingang durch ein externes Vergleichssignal (V) beaufschlagten ersten UND-Gatters (G9) und der Ausgang dieses ersten UND-Gatters (G9) an den Setzeingang (S1) des ersten Flip-Flops (FF1) gelegt ist, während andererseits das NOR-Gatter (G4) mit seinem Ausgang unmittelbar an den einen Eingang eines zweiten UND-Gatters (G8) liegt, dessen zweiter Eingang durch das genannte Vergleichssignal (V) und dessen dritter und letzter Eingang durch den nichtinvertierten Ausgang (Q1) des ersten Flip-Flops gesteuert ist, daß ferner der Ausgang des zweiten UND-Gatters (G8) mit einem Eingang eines dritten UND-Gatters (G7) verbunden ist, dessen zweiter Eingang durch ein Adreßsignal gesteuert ist, während sein Ausgang am Setzeingang (S2) des zweiten Flip-Flops (FF2) liegt, dessen Eingang mit der dem Kontrollspeicher (KS) angehörenden Auswahlleitung ($A_{KS}$) verbunden ist, daß außerdem die Reseteingänge (R1, R2) der beiden Flip-Flops (FF1, FF2) durch ein zugleich zur Taktsteuerung des zur Daten-Ein- und Ausgabe an die einzelnen Spaltenleitungen ($S_\nu$) dienenden und das Datenregister (DR) bildenden Schieberegisters dienendes Taktsignal (φ) als auch durch ein gemeinsames Rücksetzsignal (RES) — insbesondere unter Vermittlung eines ODER-Gatters (G10) — gesteuert ist und daß schließlich der nichtinvertierte Ausgang (Q1) des ersten Flip-Flops (FF1) zur Steuerung der Begrenzerlogik (BL) und der nichtinvertierte Ausgang (Q2) des zweiten Flip-Flops (FF2) zur Steuerung der Zeilensteuerlogik (ZSL) vorgesehen ist.

10. Vorrichtung nach Anspruch 9, dadurch gekennzeichnet, daß in der Begrenzerlogik (BL) drei NAND-Gatter (G5, G6, G1) vorgesehen sind, von denen das erste NAND-Gatter (G5) mit seinem einen Eingang mit dem nichtinvertierten Ausgang (Q1) des ersten Flip-Flops (FF1) und mit seinem anderen Eingang unmittelbar mit der Auswahlleitung (AKS) des zum Kontrollspeicher (KS) gehörenden Teils der Speichermatrix verbunden ist, daß dabei diese Auswahlleitung zugleich an dem einen Eingang des an seinem anderen Eingang vom Ausgang des ersten NAND-Gatters (G6) beaufschlagten zweiten NAND-Gatters (G6) liegt, daß ferner der Ausgang dieses zweiten NAND-Gatters (G6) am einen Eingang des dritten NAND-Gatters (G1) liegt, dessen zweiter Eingang durch das externe Schreibsignal (Sch) gesteuert ist, während sein Ausgang zur Steuerung eines mit seiner Source am Bezugspotential liegenden selbstsperrenden Schalttransistors (5) liegt, dessen Drain mit der Gesamtheit aller Spaltenleitungen ($S_\nu$) über wenigstens je eine Diode verbunden ist, deren Anode an der dieser Diode (7) zugeordneten Spaltenleitung ($S_\nu$) und deren Kathode in Richtung auf den Drainanschluß des Schalttransistors (5) weist bzw. mit diesem unmittelbar verbunden ist.

11. Vorrichtung nach einem der Ansprüche 6-10, dadurch gekennzeichnet, daß in der Zeilensteuerlogik (ZSL) ein NAND-Gatter (G2) vorgesehen ist, dessen einer Eingang durch das externe Löschsignal (Lö) und dessen anderer Eingang durch den nichtinvertierten Ausgang (Q2) des zweiten Flip-Flops (FF2) der Ablaufsteuerung (AST) gesteuert ist, daß dabei der Ausgang des NAND-Gatters (G2) mit dem Gate eines selbstsperrenden und mit seiner Source am Bezugspotential liegenden MOS-Feldeffekttransistors (2) verbunden ist, der durch einen Spannungsteiler an seinem Drain mit der Klemme für die Versorgungsspannung (20 V) verbunden ist, daß dabei der Teilerpunkt dieses Spannungsteilers (3, 4) an die den einzelnen Matrixzeilen (μ) jeweils zugeordneten Programmierleitungen ($P_\mu$, $P_{KS}$) der Speichermatrix in

dem den Kontrollspeicher (KS) bildenden Teil gelegt ist.

**Claims**

1. A method of operating a utilisation store (ASP) in the form of a non-volatile write/read store, in combination with a control store (KS) which stores the number of erasing steps carried out in the utilisation store (ASP), characterised in that, prior to each erasure step, an identification characteristic is input so as to be unerasable into an unrecorded storage position of the control store (KS) and that, without such prior storage of the identification characteristic, any erasing step is suppressed.

2. A methods as claimed in Claim 1, characterised in that, by means of a logic circuit (ZSL, FS) to which it is connected, the control store (KS) can be converted from an erasable store into a — then permanently — non-erasable store.

3. A method as claimed in Claim 1 or Claim 2, characterised in that from the utilisation store (ASP) which is to be addressed row-by-row, and from the control store (KS) which is likewise to be addressed row-by-row, a common matrix is formed in which at least one of the column lines ($S_v$) of this storage matrix contains both storage cells of the utilisation store (ASP) and also at least one storage cell of the control store (KS).

4. A method as claimed in one of the preceding Claims, characterised in that the storage cells are discharged in the recorded state so that erasure of the control store (KS) is also not possible as a result of a discharge of the storage cells.

5. A method as claimed in one of the preceding Claims, characterised in that the recording of the control store (KS) is dependent upon a contents check of the control store (KS).

6. A device for carrying out the method claimed in one of the preceding Claims comprising :
— a utilisation store (ASP) ; and
— a control store (KS) in each case in the form of a non-volatile write-read store, where the control store (KS) is non-erasable,
characterised by
— a flow control unit (AST) ;
— a limiter logic unit (BL) which, in association with the flow control unit (AST) and a write signal (Sch), facilitates an entry in the control store (KS) when the latter contains at least one unrecorded storage cell ;
— a row control logic unit (ZSL) which, in association with the flow control unit (AST) and an erasing signal (Lö), permits a controlled erasure of the utilisation store (ASP) when an entry has been made in the control store (KS) ; and
— a comparator logic unit (VL) for checking the control store (KS) in respect of at least one unrecorded storage cell, or in respect of an executed entry,
where the utilisation store (ASP) and the control store (KS) each contain storage cells which are accessible via column lines ($S_v$) and row lines ($A_\mu$, $A_{KS}$).

7. A device as claimed in Claim 6, characterised in that each column line ($S_v$) is connected at one end via a load resistor (10) to a terminal which supplies a supply potential (20 V) and, at the other end, which forms a data output ($DA_v$) of the respective column, is connected not only to a data register (DR), but also, via two series-connected self-blocking MOS field-effect transistors (9, 8) to reference potential, that the first of these transistors (8) is controlled by a signal input ($DE_v$) of the respective matrix column ($v$), and the other transistor (9), which is connected by its drain to the respective column line ($S_v$) — together with the transistors (9) to which it corresponds and which are connected to the other column lines — is controlled by an external write signal (Sch).

8. A device as claimed in Claim 7, characterised in that the input component of the comparator logic unit (VL), which is in each case assigned to a column line ($S_v$), consists of an inverter (i1) which is connected at its input to the data output ($DA_v$) of the individual column line ($S_v$), and whose output, together with the data input ($DE_v$) which is assigned to the respective column line ($S_v$), serves to control a NOR-gate (G3), and that the NOR-gates (G3), which in each case form the output of an input component of the comparator logic unit (VL) assigned to a column line, serve to control a respective input of a further NOR-gate (G4) which forms the common output component of the comparator logic unit (VL), and whose output acts upon the flow control unit (AST).

9. A device as claimed in Claim 8, characterised in that in the flow control unit (AST) a first RS flip-flop (FF1) is controlled at its setting input (S1), and a second RS flip-flop (FF2) is controlled at its setting input (S2) by the output of the common NOR-gate (G4) of the comparator logic unit (VL), that for this purpose the output of the common NOR-gate (G4) is connected via an inverter (i2) to the first input of a first AND-gate (G9), which is supplied at its other input with an external comparator signal (V), and the output of this first AND-gate (G9) is connected to the setting input (S1) of the first flip-flop (FF1) whereas, on the other hand, the NOR-gate (G4) is directly connected by its output to the first input of a second AND-gate (G8) whose second input is controlled by the aforementioned comparator signal (V), and whose last input is controlled by the non-inverted output (Q1) of the first flip-flop, that moreover the output of the second AND-gate (G8) is connected to an input of a third AND-gate (G7) whose second input is controlled

**0 123 177**

by an address signal, whilst its output is connected to the setting input (S2) of the second flip-flop (FF2) whose input is connected to the selection line ($A_{KS}$) which is assigned to the control store (KS), that moreover the resetting inputs (R1, R2) of the two flip-flops (FF1, FF2) are controlled by a clock signal ($\phi$) which clock-controls the shift register which is used for the input and output of data into/out of the individual column lines ($S_\nu$) and which forms the data register (DR), and also by a common resetting signal (RES) — in particular via an OR-gate (G10), and that finally the non-inverted output (Q1) of the first flip-flop (FF1) serves to control the limiter logic unit (BL), and the non-inverted output (Q2) of the second flip-flop (FF2) serves to control the row control logic unit (ZSL).

10. A device as claimed in Claim 9, characterised in that the limiter logic unit (BL) includes three NAND-gates (G5, G6, G1) of which the first NAND-gate (G5) is connected by first its input to the non-inverted output (Q1) of the first flip-flop (FF1), and is directly connected by its other input to the selection line ($A_{KS}$) of that part of the store matrix which is assigned to the control store (KS), that this selection line is simultaneously connected to the first input of the second NAND-gate (G6), which latter is connected at its other input to the output of the first NAND-gate (G5), that moreover the output of this second NAND-gate (G6) is connected to the first input of the third NAND-gate (G1) whose second input is controlled by the external write signal (Sch), whilst its output serves to control a self-blocking switching transistor (5) which is connected by its source to the reference potential, and whose drain is connected to all the column lines ($S_\nu$) in each case via at least one diode whose anode is connected to the column line ($S_\nu$) assigned to this diode (7), and whose cathode faces in the direction of the drain terminal of the switching transistor (5) and is directly connected to the latter.

11. A device as claimed in one of Claims 6 to 10, characterised in that the row control logic unit (ZSL) includes a NAND-gate (G2) whose first input is controlled by the external erasing signal (Lö), and whose other input is controlled by the non-inverted output (Q2) of the second flip-flop (FF2) of the flow control unit (AST), that the output of the NAND-gate (G2) is connected to the gate of a self-blocking MOS field-effect transistor (2) which is connected by its source to the reference potential, and which is connected by its drain, via a voltage divider, to the terminal for the supply voltage (20 V), and that the divider point of this voltage divider (3, 4) is connected to the programming lines ($P_\mu$, $P_{KS}$) — in each case assigned to the individual matrix rows ($\mu$) — of the storage matrix in the component which forms the utilisation store (ASP) and in the component which forms the control store (KS).

### Revendications

1. Procédé pour l'exploitation d'une mémoire d'application (ASP), réalisée comme une mémoire écriture-lecture non volatile, en combinaison avec une mémoire de contrôle (KS) retenant le nombre des opérations d'effacement effectuées sur la mémoire d'application (ASP), caractérisé en ce que, avant chaque opération d'effacement, on mémorise un signe distinctif de façon ineffaçable dans un emplacement non inscrit de la mémoire de contrôle (KS) et que, sans une telle mémorisation préalable du signe distinctif, toute opération d'effacement est rendue impossible.

2. Procédé selon la revendication 1, caractérisé en ce que la mémoire de contrôle (KS) peut être transformée, à l'aide d'un circuit logique (ZSL/FS) qui lui est relié d'une mémoire effaçable en une mémoire qui est ensuite non effaçable de façon permanente.

3. Procédé selon la revendication 1 ou 2, caractérisé en ce que la mémoire d'application (ASP), à adresser rangée par rangée, et la mémoire de contrôle (KS), qui est également à adresser rangée par rangée, forment une matrice de mémorisation commune, dans laquelle au moins une des lignes de colonnes (S$\nu$) présente à la fois des cellules-mémoires de la mémoire d'application (ASP) et au moins une cellule-mémoire de la mémoire de contrôle (KS).

4. Procédé selon une des revendications précédentes, caractérisé en ce que les cellules-mémoires sont déchargées à l'état inscrit, de sorte que la mémoire de contrôle (KS) ne peut pas non plus être effacée par la décharge des cellules-mémoires.

5. Procédé selon une des revendications précédentes, caractérisé en ce que l'écriture de la mémoire de contrôle (KS) dépend d'une vérification du contenu de la mémoire de contrôle (KS).

6. Dispositif pour la mise en œuvre du procédé selon une des revendications précédentes, comprenant
— une mémoire d'application (ASP) et
— une mémoire de contrôle (KS), chacune sous forme d'une mémoire écriture-lecture non volatile, la mémoire de contrôle (KS) n'étant pas effaçable,
caractérisé par
— une commande séquentielle (AST),
— une logique de limitation (BL) qui, en combinaison avec la commande séquentielle (AST) et un signal d'écriture (Sch), permet une inscription dans la mémoire de contrôle (KS) lorsque celle-ci contient encore au moins une cellule-mémoire non inscrite,
— une logique de commande de rangées (ZSL) qui, en combinaison avec la commande séquentielle (AST) et un signal d'effacement (Lö), autorise un effacement commandé de la mémoire d'application (ASP) lorsqu'une inscription dans la mémoire de contrôle (KS) a eu lieu et

12

— une logique de comparaison (VL) pour vérifier la mémoire de contrôle (KS) sur la présence d'au moins une cellule-mémoire non inscrite ou sur la réalisation d'une inscription qui a eu lieu, la mémoire d'application (ASP) et la mémoire de contrôle (KS) présentant chacune des cellules-mémoires accessibles par des lignes de colonnes (Sv) et des lignes de rangées (A$_\mu$, A$_{KS}$).

7. Procédé selon la revendication 6, caractérisé en ce que chaque ligne de colonne (Sv) est reliée à une extrémité, à travers une résistance de charge (10), à une borne fournissant un potentiel d'alimentation (20 V) et présente à l'autre extrémité, formant une sortie de données (DAv) de la colonne concernée, à côté d'une liaison avec un registre de données (DR), une liaison avec le potentiel de référence, laquelle est établie par deux transistors à effet de champ MOS (9, 8) autobloquants montés en série, que l'un (8) de ces transistors est commandé par une entrée de signal (DEv) de la colonne (v) concernée de la matrice et que l'autre transistor (9), relié par son drain à la ligne de colonne (Sv) en question, est commandé conjointement avec les transistors (9) qui lui corresponde sur les autres lignes de colonnes, par un signal d'écriture (Sch) externe.

8. Dispositif selon la revendication 7, caractérisé en ce que la partie d'entrée de la logique de comparaison (VL), partie d'entrée de la logique de comparaison (VL), partie qui est coordonnée chaque fois à une ligne de colonne (Sv), est formée d'un inverseur (i1) relié côté entrée à la sortie de données (DAv) de la ligne de colonne (Sv) en question, inverseur dont la sortie est prévue, ensemble avec l'entrée de données (DE) coordonnée à la ligne de colonne (Sv) concernée, pour la commande d'une porte NOR (G3), et que la porte NOR (G3), formant chaque fois la sortie d'une partie d'entrée, coordonnée chaque fois à une ligne de colonne, de la logique de comparaison (VL), est connectée en vue de la commande de chaque fois une entrée d'une autre porte NOR (G4), constituant la partie de sortie commune de la logique de comparaison et dont la sortie est prévue pour attaquer la commande séquentielle (AST).

9. Dispositif selon la revendication 8, caractérisé en ce que la commande séquentielle (AST) comporte une première bascule RS (FF1) et une seconde bascule RS (FF2) qui sont commandées à leurs entrées de positionnement (S1, S2) par la sortie de la porte NOR (G4) commune de la logique de comparaison (VL), que, dans ce but, la sortie de la porte NOR (G4) commune est reliée à travers un inverseur (i2) à l'une des entrées d'une porte ET (G9), à l'autre entrée de laquelle est appliqué un signal de comparaison (V) externe, la sortie de cette première porte ET (G9) étant connectée à l'entrée de positionnement (S1) de la première bascule (FF1), tandis que, par ailleurs, la porte NOR (G4) est reliée directement par sa sortie à l'une des entrées d'une deuxième porte ET (G8), dont la deuxième entrée est commandée par le signal de comparaison (V) mentionné et dont la troisième et dernière entrée est commandée par la sortie non inversée (Q1) de la première bascule, que, en outre, la sortie de la deuxième porte ET (G8) est reliée à une entrée d'une troisième porte ET (G7) dont la seconde entrée est commandée par un signal d'adresse, tandis que sa sortie est reliée à l'entrée de positionnement (S2) de la seconde bascule (FF2), dont l'entrée est reliée à la ligne de sélection (A$_{KS}$) appartenant à la mémoire de contrôle (KS), que, en outre, les entrées de restauration (R1, R2) des deux bascules (FF1, FF2) sont commandées par un signal d'horloge ($\phi$), servant en même temps à la commande de progression du registre à décalage, destiné à l'entrée et à la sortie des données sur les différentes lignes de colonnes (Sv) et constituant le registre de données (DR), ainsi que par un signal commun de remise à l'état initial (RES) — en particulier à travers une porte OU (G10) — et que, enfin, la sortie non inversée (Q1) de la première bascule (FF1) est prévue pour la commande de la logique de limitation (BL) et la sortie non inversée (Q2) de la seconde bascule (FF2) est prévue pour la commande de la logique de commande de rangées (ZSL).

10. Dispositif selon la revendication 9, caractérisé en ce que la logique de limitation (BL) comporte trois portes NON-ET (G5, G6, G1) dont la première (G5) est reliée par une entrée à la sortie non inversée (Q1) de la première bascule (FF1) et par son autre entrée directement à la ligne de sélection (A$_{KS}$) de la partie de la matrice de mémorisation appartenant à la mémoire de contrôle (KS), que cette ligne de sélection est reliée en même temps à l'une des entrées de la deuxième porte NON-ET (G6), dont l'autre entrée est attaquée par la sortie de la première porte NON-ET (G5), que, en outre, la sortie de cette deuxième porte NON-ET (G6) est reliée à une entrée de la troisième porte NON-ET (G1), dont la seconde entrée est commandée par le signal d'écriture externe (Sch), tandis que sa sortie est reliée en vue de la commande d'un transistor de commutation (5) autobloquant dont la source est reliée au potentiel de référence, le drain de ce transistor étant relié à la totalité des lignes de colonnes (Sv) à travers au moins une diode dont l'anode est reliée à la ligne de colonne (Sv) coordonnée à cette diode (7) et dont la cathode est dirigée vers la connexion de drain ou est reliée directement à cette connexion du transistor de commutation (5).

11. Dispositif selon une des revendications 6-10, caractérisé en ce que la logique de commande des rangées (ZSL) comporte une porte NON-ET (G2) dont une entrée est commandée par le signal d'effacement externe (Lö) et dont l'autre entrée est commandée par la sortie non inversée (Q2) de la seconde bascule (FF2) de la commande séquentielle (AST), que la sortie de la porte NON-ET (G2) est reliée à la grille d'un transistor à effet de champ MOS (2) de type autobloquant et dont la source est reliée au potentiel de référence, transistor qui est relié par un diviseur de tension prévu sur son drain à la borne pour la tension d'alimentation (20 V), et que le point de division de ce diviseur de tension (3, 4) est disposé sur les lignes de programmation (P$_\mu$, P$_{KS}$) de la matrice de mémorisation, lignes qui sont coordonnées chaque fois aux différentes rangées ($\mu$) de la matrice, dans la partie formant la mémoire d'application (ASP) et dans la partie formant la mémoire de contrôle (KS).

13

# FIG 1

FIG 2

# FIG 3